# EUROPÄISCHE PATENTSCHRIFT

(11) **EP 1 131 016 B1**
(45) Veröffentlichungstag und Bekanntmachung des Hinweises auf die Patenterteilung: **02.02.2005**
(21) Anmeldenummer: 99953972.9
(22) Anmeldetag: 06.11.1999
(51) Int. Cl.: A61D 11/00, A01K 13/00

(54) **VERFAHREN ZUR HUFBEHANDLUNG VON SÄUGETIEREN, INSBESONDERE VON RINDERN**
METHOD FOR TREATING THE HOOVES OF MAMMALS, ESPECIALLY CATTLE
PROCEDE DE TRAITEMENT DES PIEDS OU SABOTS DE MAMMIFERES, NOTAMMENT DE BOEUFS

(30) Priorität: 17.11.1998 FR 9814392
(43) Veröffentlichungstag der Anmeldung: 12.09.2001
(73) Patentinhaber: Ecolab Inc., St. Paul, MN 55102-1390 (US)
(72) Erfinder: BRAGULLA, Siegfried, D-40789 Monheim (DE); BARDONESCHI, Gilbert, F-51300 Bassu (FR); COLLIN, Alain, F-94230 Cachan (FR); DE ROQUEFEUILLE, Hubert, F-78640 St. Germain de la Grange (FR)
(74) Vertreter: Godemeyer, Thomas, Dr.
(86) Internationale Anmeldenummer: PCT/EP1999/008528
(87) Internationale Veröffentlichungsnummer: WO 2000/028917

(56) Entgegenhaltungen:
- EP-A- 0 497 062
- FR-A- 1 081 555
- GB-A- 1 388 676
- US-A- 3 108 574
- US-A- 4 126 104
- US-A- 5 630 379

## Beschreibung

Die vorliegende Erfindung bezieht sich auf ein Verfahren zur Hufbehandlung von Zuchttieren und vor allem von Rindern, insbesondere von Zuchttieren, welche im Stall gehalten werden. Rinder, aber auch Schafe, Ziegen und Zuchtpferde leiden häufig an Huferkrankungen insbesondere infolge von Entzündungen viralen oder baktieriellen Ursprungs zwischen den Huf- bzw. Zehenden; diese Entzündungen, die äußerst schmerzhaft sind, verursachen Lahmheiten oder Bewegungsschwierigkeiten, die dazu führen, dass das Tier sich nicht mehr normal ernährt, was eine Verringerung seiner Milchproduktion mit sich bringt.

Folglich machen diese durch krankheitsübertragende Mikroorganismen hervorgerufenen Krankheiten den Züchtern ernste Probleme, dies umso mehr, als sie von einem Tier auf das andere übertragbar sind.

Es ist festzustellen, dass diese Probleme bei Tieren, die auf der Weide leben, die sich also auf weichen und ausgedehnten Flächen bewegen, relativ selten auftreten; sie treten in stärkerem Maße auf, wenn sich die Tiere ständig im Stall aufhalten, insbesondere im Fall der sog. "freien" Stallhaltung. In solchen Ställen bewegen sich die Tiere frei in einem begrenzten Raum, der mit Beton und femer mit Gittern abgegrenzt ist, das heißt mit einem unnatürlichen Boden aus durch Schlitze voneinander getrennt über einer Grube verlegten Betonlatten, welche der Entsorgung des Mistes dient.

Verständlicherweise können derartige Oberflächen, die besonders hart sind, nicht in einwandfreiem hygienischen Zustand gehalten werden, so dass es unvermeidbar ist, dass die Tiere im Schmutz und insbesondere in ihren eigenen Exkrementen stehen und waten.

Diese Lebensbedingungen mit den physischen und mechanischen Folgen wegen der ständigen Bewegung der Tiere auf einem Boden von großer Härte verursachen eine ständige Reizung im Hufbereich; diese äußert sich durch Erweichen der Hornschicht im Bereich der Hufenden, also durch ein Brüchigwerden, was ein Tor für Entzündungskrankheiten öffnet, weiche auf die sehr große Zahl an Krankheitserregern auf dem Boden zurückzuführen sind, auf dem sich die Tiere bewegen.

Wie bereits erwähnt, sind diese Entzündungen, die sich insbesondere durch Abszesse zwischen den Hufenden äußern, sehr schmerzhaft und verursachen eine außerordentliche Berührungsempfindlichkeit, welche die lokale Behandlung der entzündeten Bereiche, insbesondere bei Anwendung von Antibiotika auf der Haut, sehr erschwert.

Folglich besteht die einzig mögliche Behandlungsmethode darin, Antibiotika auf oralem Wege zu verabreichen; man stellt jedoch fest, dass ein derartige Behandlung immer weniger wirksam wird, was auf eine zunehmende Resistenz der im Schmutz befindlichen Krankheitserreger gegen die unterschiedlichen Antibiotika zurückzuführen ist.

Um diesen Nachteilen zu begegnen, hat man bereits Verfahren zur Hufbehandlung von Zuchttieren, inbesondere von Rindern, vorgeschlagen, die nicht die Heilung sondern die Vorbeugung zum Ziel haben.

Diese Verfahren bestehen darin, die zu behandelnden Tiere durch Fußbecken laufen zu lassen, d. h., durch große und flache Becken, weiche mit Desinfektionsmittelbädern gefüllt sind. Diese Bäder bestehen in der Regel aus hochkonzentrierten Lösungen aus Formaldehyden in Verbindung mit Kupfersulfat. Sie beinhalten allgemein etwa 10% Formaldehyd und 2% Kupfersulfat. In solchen Lösungen agiert das Formaldehyd als Desinfektionsmittel, wohingegen das Kupfersulfat die Aufgabe hat, das Horn der Hufe der Tiere zu stärken, um sie weniger empfindlich gegenüber physischen und mechanischen Reizen zu machen, die eine Folge der Härte der Fläche sind, auf der sie sich bewegen.

Solche Bäder haben sich jedoch als nicht zufriedenstellend erwiesen: Tatsächlich sind sie übelriechend und zugleich wegen ihrer hohen Konzentration an Formaldehyd sehr hautreizend und wegen der erheblichen Mengen an Kupfersulfat umweitschädlich.

Der Hauptnachteil dieser bekannten Behandlungsbäder hängt jedoch mit der ungenügenden mikrobentötenden Wirksamkeit zusammen: Tatsächlich bringen die Tieren beim Durchlaufen des Fußbades eine große Menge an proteinhaltigem Schmutz in das Bad ein; das Formaldehyd reagiert nun bevorzugt mit diesen organischen Rückständen, und zwar zu Lasten der konkurrierenden Reaktion zur Vernichtung der Krankheitserreger und ist somit sehr schnell wirkungslos.

Aus der US-A-5 630 379 ist ein Verfahren bekannt, bei dem in einem ersten Schritt die Hufe mit Hilfe eines automatischen Sprühsystems gereinigt werden, und in einem zweiten Schritt die Hufe durch Eintauchen oder Besprühen mit einer Vorbengungslösung behandelt werden.

Der Vollständigkeit halber sei erwähnt, dass man auch schon Fußbäder mit Antibiotika vorgeschlagen hat. Die Anwendung derartiger Bäder im großen Umfang kann jedoch nicht ernsthaft in Erwägung gezogen werden, da die Becken periodisch geleert werden müssen, um die Behandlungsbäder zu erneuern, so dass erhebliche Mengen an Antibiotika, deren Umweltschädlichkeit erwiesen ist, in die freie Natur gebracht werden.

Der vorliegenden Erfindung liegt die Aufgabe zugrunde, diese Nachteile zu beseitigen mit einem Verfahren zur Hufbehandlung von Zuchttieren, vor allem von Rindern, insbesondere von Milchkühen, die im Stall gehalten werden, wobei das Verfahren ausreichend wirksam ist, um die oben erwähnte Problematik der Entzündungen im Bereich der Hufenden zu lösen, ohne Hautreizungen zu verursachen und zugleich ohne die Umwelt zu schädigen.

Diese Aufgabe wird durch ein Verfahren gemäß Anspruch 1 gelöst.

Die Grundidee der Erfindung besteht also darin, das schnelle Unwirksamwerden des Desinfektionsmittels im Behandlungsbad durch organischen Schmutz, der an ..den Hufen der Tiere haften bleibt, zu vermeiden, indem dieser Schmutz vor der Anwendung des Desinfektionsmittels in einer vorausgehenden Reinigungsphase entfernt wird.

Eine derartige Reinigung muss unbedingt automatisch erfolgen: Eine Reinigung von Hand ist sowohl wegen der Zeit, die das Personal benötigt, als auch wegen der Berührungsempfindlichkeit der Tierhufe nicht anzustreben.

Zu diesem Zweck führt man nach einem bevorzugten Merkmal der Erfindung die zu behandelnden Tiere während der Reinigungsphase durch einen Reinigungsgang, der zumindest auf einer Seite, bevorzugt auf beiden Seiten, Sprührampen besitzt, die mit einer Reihe von Sprühdüsen ausgestattet sind, mit welchen jeweils Wasseroder Reinigungsmittelstrahlen unter bestimmten Druck direkt auf die Hufe der zu behandelnden Tiere gerichtet werden können.

Folglich wird gemäß der Erfindung die Reinigungsphase in einem Reinigungsgang durchgeführt, der so angeordnet ist, dass die zu behandeinden Tiere diesen durchlaufen müssen.

Dieser Gang, der eine Länge in der Größenordnung von 1 bis 10 m hat, ist vorzugsweise seitlich durch zwei vertikale Wände begrenzt und beidseitig durch zwei Rahmen eingefasst, an welchen zwei parallel verlaufende Rampen mit Sprühdüsen angebracht sind, die an eine Hochdruckpumpe angeschlossen sind, durch welche Wasser oder ein Reinigungsmittel zugeführt wird. Die Rampen sind mit Schutzblechen verkleidet, um nicht von den Tieren während des Durchganges beschädigt zu werden.

Man konnte feststellen, dass bei einer derartigen Reinigung der Schmutz, der an den Tierhufen haftet, vollautomatisch und ohne manuellen Kontakt schnell und sicher entfernt wird.

Es kann auf diese Weise vermieden werden, dass das Desinfektionsmittel, das anschließend verwendet wird, unwirksam wird.

Entsprechend der Erfindung kann die Anwendung dieses Desinfektionsmittels entweder in einem Fußbad, das sich ganz am Ende des Reinigungsganges befindet. oder mit Hilfe eines sich ebenfalls am Ende des Reinigungsganges befindlichen zweiten automatischen Sprühsystems ähnlich dem automatischen Sprühsystem für das Reinigungsmittel durchgeführt werden.

Das Desinfektionsmittel kann im Übrigen entweder in flüssiger Form oder vorzugsweise in Form eines Schaums angewendet werden, der den Vorteil hat, sich länger auf der Haut des Tieres zu halten als ein flüssiges Mittel, was die Kontaktzeit mit den Desinfektionsmitteln verlängert und folglich die Vernichtung der Krankheitserreger auf der Haut des Tieres, insbesondere in seinen Hautfalten, begünstigt.

Ein weiterer Vorteil des Schaumes besteht darin, dass er sichtbar ist, wodurch man sich versichern kann, ob alle Füße oder Hufe der Tiere sorgfältig behandelt sind.

Wenn, wie es häufig der Fall ist, die Behandlung für Milchkühe bestimmt ist, können sowohl der Reinigungsgang als auch die Vorrichtung zur Anwendung des Desinfektionsmittels vorzugsweise direkt vor dem Melkbereich angeordnet sein. Auf diese Weise wird die Behandlung obligatorisch zweimal am Tag durchgeführt, nämlich vor dem Melken am Morgen und vor dem Melken am Abend, und das Desinfektionsmittel kann während der gesamten Melkdauer einwirken, um so die Vernichtung aller Krankheitserreger zu gewährleisten.

Entsprechend einem weiteren Merkmal der Erfindung geht der Reinigungsphase eine Behandlungsphase voraus, in der man eine Vorerweichung des an den Hufen der Tiere haftenden Schmutzes durch Befeuchten oder Besprühen mit Wasser oder einem Reinigungsmittel durchführt. Die vorausgehende Phase erleichtert die Entfernung dieses Schmutzes während der Reinigungsphase; auch sie kann in einem Fußbad durchgeführt werden, das sich direkt vor dem Reinigungsgang befindet, oder mit Hilfe eines Sprühsystems.

Es ist im Übrigen zu bemerken, dass das Reinigungsmittel Wasser sein kann aber vorzugsweise besteht es aus einer verdünnten Lösung aus Seifen der gebräuchlichen, oberflächenaktiven Mittel, vor allem nichtionischen, kationischen oder anionischen Tensiden und eventuell gemischt mit anderen Reinigungsmitteln, wie Phosphaten oder Glykonaten. Diese Lösung muss selbstverständlich so gewählt werden, dass sie keine Hautreizungen hervorruft.

Es konnte überraschenderweise festgestellt werden, dass entsprechend der Erfindung bestimmte desinfizierende Zusammensetzungen mit schwacher Konzentration eine deutlich höhere Wirksamkei haben, als die Zusammensetzungen auf Basis von Formaldehyden und Kupfersulfat, und zwar unter der Bedingung, dass die Haut des Tieres vorher entsprechend gereinigt wurde, um jegliche Spuren organischer Verschmutzung zu beseitigen. Diese desinfizierenden Zusammensetzungen sind vorteilhafterweise nicht umweltschädlich und ausreichend löslich, so dass sie kein Hautreizungen hervorrufen.

Nach einem weiteren Merkmal der Erfindung kann das Aldehyd vorteilhafterweise zwischen 100 und 1.000 mg/l betragen, das hauptsächlich der Gruppe des Formaldehyds, des Glutaraldehyds, des Glyoxals und ihrer Mischungen entstammt.

Solche Aldehyde können vorteilhaft zu 10 bis 10.000 mg/l, bevorzugt zu 100 bis 1.000 mg/l, mit einem oder einer Mischung kationischer Tenside kombiniert werden, die hauptsächlich aus der Gruppe der quaternären, aliphatischen oder heterozyklischen Ammonium- oder Phosphoniumderivaten entstammen, die zumindest eine langkettige Alkylgruppe ausweisen, vorzugsweise aus C₈ bis C₁₈ auf ihrem quaternären Rumpf. Beispiele solcher Zusammensetzungen sind Cocosalkylbenzyldimethylamoniumchlorid, das Dioctyldimethylamoniumchlorid oder auch das Tributyltetradecylphosphoniumchlorid.

Eine andere vorteilhafte Möglichkeit besteht darin, daß die Percarboxyl-Säure zwischen 500 und 1.000 mg/l, beträgt, welche hauptsächlich der Gruppe der Peressigsäure, der Persuccinsäure, der Permilchsäure, der Perglutarsäure, der Peradipinsäure, der Perpropionsäure, der Perameisensäure oder ihren Mischungen entstammt.

Berücksichtigt man die inhärente Instabilität an den Persäuren, so enthält ein derartiges Desinfektionsmittel in der Regel zwischen 100 und 100.000 mg/l Wasserstoffperoxyd. Außerdem ist festzustellen, dass man entsprechend der Erfindung den Peraciden vorzugsweise 10 bis 10.000 mg/l anionischer Tenside beifügen kann, die hauptsächlich der Gruppe der Alkylbenzensulfonsäuren, der Alkylsulfonaten oder der Carboxylsäureether entstammen.

Zusätzlich können oberflächenaktive, nichtionische Tenside, vorzugsweise fetthaltige Ethoxyl- oder Propoxylalkohole als auch Oxoalkohole, kondensiert mit Ethylenoxyd und Propylenoxyd eingesetzt werden.

Die besonders vorteilhaften Ausführungsbeispiele des erfindungsgemäßen Verfahrens sind mit Hilfe der nachfolgenden Beispiele erläutert.

Einleitend sei bemerkt, dass entsprechend der Erfindung eine Desinfektionslösung als ausreichend wirksam gilt, wenn deren Gehalt an Krankheitserregern nach dem Durchgang von 40 Tieren durch ein Fußbad mit einer solchen Lösung unter 10.000/ml liegt oder wenn die Reduzierung der Anzahl der an den Füßen oder Hufen der Tiere vorhandenen Erreger nach dem Gang durch diese Lösung bei etwa 3 log. oder darüber liegt.

### Beispiel 1

Man ließ 40 Milchkühe 40 Fussbäder passieren, die unterschiedliche Desinfektionsmittel enthielten, nämlich einerseits ein Desinfektionsmittel nach dem Stand der Technik und andererseites vier Desinfektionsmittel A, B, C und D, gemäß der Erfindung, und dies unter unterschiedlichen Bedingungen, und man hat die Reduktion der Anzahl der Staphylococcus Aureus auf der Haut der Kühe nach einer Kontaktzeit von zehn Minuten bei 25 C gemessen.

Die erzielten Ergebnisse sind in der untenstehenden Tabelle 1 aufgeführt:

**Tabelle 1**

| Testbedingungen | Desinfektionsmittel | Reduktion in log. |
|---|---|---|
| herkömmliches Verfahren | Formaldehyd 10% Kupersulfat 2% | 0,32 bis 0,78 |
| Verfahren gemäß der Erfindung mit vorheriger Reinigung und mit einem Desinfektionmittel, das in flüssiger Form in einem Fussbad vorgesehen ist | A) 0,6% Formaldehyd +0,4% Glutaraldehyd +0,4% Benzalkon turchlorid | 2.54 bis 2,76 |
| | B) 0,1 % Peressigsäure +0,1% Alkylben zensulfonsäure | 2,98 bis 3,48 |
| | C) 0, 1 % Perlmilchsäure +0,1% Alkylben zensulfonsäure +0,05% Persuccinsäure +0,05% Peradipinsäure +0,05% Perglutarsäure | 3,26 bis 4.02 |
| Verfahren gemäß der Erfindung mit vorheriger Reinigung und einem Desinfektionsmittel, das in Form von Schaum aufgebracht wird | D) 0,1% Peressigsäure +0,1% Alkylben zensulfonsäure | 4,24 bis 4,78 |

Dieses Beispiel bestätigt klar die Vorteile des erfindungsgemäßen Verfahrens im Vergleich zu herkömmlichen Verfahren ohne vorherige Reinigung, insbesondere wenn das Desinfektionsmittel in Form von Schaum aufgebraucht wird.

### Beispiel 2

Man ließ 40 Kühe ein Fussbad passieren, das drei Infektionsmittel nach dem Stand der Technik enthielt ohne eine vorherige Reinigung und man hat die Anzahl der überlebenden Keime in 1 ml des Bades nach diesem Durchgang gemessen.

Die erzielten Ergebnisse sind in der folgenden Tabelle 2 aufgeführt:

**Tabelle 2**

| Desinfektionsmittel | Keime, die in der Desinfektionslösung nach dem Durchgang von 40 Kühen durch das Fußbad überleben | |
|---|---|---|
| | aerobe Bakterien | Bazillen |
| Formaldehyd 5% + | 10⁵ - 10⁶ | 10⁵ - 10⁶ |
| Kupfersulfat 2% | | |
| | | |
| Formaldehyd 10% + | 10⁵ - 10⁶ | 10⁵ - 10⁶ |
| Kupfersulfat 2% | | |
| | | |
| Kupfersulfat 2% | 10⁵ - 10⁶ | 10⁵ - 10⁶ |

Man hat anschließend dasselbe Experiment wiederholt, aber zuvor eine Reinigung der Hufe der Kühe durch automatisches Besprühen mit einem Reinigungsmittel durchgeführt, und Fußbäder mit unterschiedlichen Reinigungsmitteln gemäß der Erfindung verwendet.
Die erzielten Ergebnisse sind in der folgenden Tabelle 3 aufgeführt:

**Tabelle 3**

| Desinfektionsmittel | Keime, die in der Desinfektionslösung nach dem Durchgang von 40 Kühen durch das Fußbad überleben | |
|---|---|---|
| | aerobische Bakterien | Bazillen |
| Formaldehyd 0,6% | | |
| Glutaraldehyd 0,4% | 9000 | 6500 |
| Benzalkoniumchlorid 0,4% | | |
| Peressigsäure 0,1% | 320 | 230 |
| Alkylbenzensulfonsäure 0,1% | | |
| Permilchsäure 0, 1 % | | |
| Perglutarsäure 0,05% | | |
| Peradipinsäure 0,05% | 1800 | 450 |
| Persuccinsäure 0,05% | | |
| Alkylbenzensulfonsäure 0,10% | | |

Ein Vergleich der Tabellen 2 und 3 zeigt deutlich die Überlegenheit des erfindungsgemäßen Verfahrens gegenüber dem Verfahren nach dem Stand der Technik.

## Patentansprüche

1. Verfahren zur Reinigung der Hufe von Zuchttieren und vor allem von Rindem, insbesondere von Milchkühen, die im Stall leben, mit Hilfe eines Sprühsystems, wobei man in einem ersten Schritt die Hufe der Tiere mit Hilfe eines automatischen Sprühsystems für Wasser oder ein Reinigungsmittel, das Seife oder ein tensides Mittel enthält, reinigt, um jegliche Spuren von Exkrementen, insbesondere von Mist oder anderen Verschmutzungen, die beispielsweise vom Streu stammen, zu beseitigen, und in einem zweiten Schritt die zuvor gereinigten Hufe der Tiere durch Eintauchen in oder Besprühen mit ein/einem Desinfektionsmittel behandelt und wobei das Desinfektionsmittel 10 - 10.000 mg/l Aldehyd oder 100 - 10.000 mg/l Percarboxylsäure oder 100 - 100.000 mg/l H₂O₂ enthält.

2. Verfahren nach Anspruch 1, **dadurch gekennzeichnet, dass** während der Reinigungsphase die zu behandelnden Tiere einen Waschgang passieren, der zumindest auf einer Seite, bevorzugt auf beiden Seiten eine Sprührampe aufweist, die mit einer Reihe von Sprühdüsen ausgerüstet ist, mit welchen Wasser- oder Reinigungsmittelstrahlen unter vorgegebenem Druck auf die Hufe der zu behandelnden Tiere gerichtet werden können.

3. Verfahren nach Anspruch 1 oder 2, **dadurch gekennzeichnet, dass** der Reinigungsphase eine Behandlungsphase vorausgeht, in der eine Vorerweichung der Verunreinigungen, die an den Hufen der Tiere haften, durch Eintauchen oder Besprühen in/mit Wasser oder in ein/mit einem Reinigungsmittel durchgeführt wird.

4. Verfahren nach einem der Ansprüche 1 bis 3 für die Behandlung von Milchkühen, **dadurch gekennzeichnet, dass** es in einer Anlage durchgeführt wird, die sich direkt vor dem Melkbereich befindet.

5. Verfahren nach einem der Ansprüche 1 bis 4, **dadurch gekennzeichnet, dass** das Aldehyd zwischen 100 und 1.000 mg/l beträgt, das vor allem der Gruppe des Formaldehyds, des Glutaraldehyds, des Glyoxals und deren Mischungen entstammt.

6. Verfahren nach Anspruch 5, **dadurch gekennzeichnet, dass** das Desinfektionsmittel zwischen 10 und 10.000 mg/l, vorzugsweise zwischen 100 und 1.000 mg/l, kationischer Tenside enthält, die im wesentlichen der Gruppe der quatemären, aliphatischen oder heterozyklischen Ammoniumund Phosphoniumderivaten entstammen, die zumindest eine langkettige Alkylgruppe aufweisen, bevorzugt aus C₈ und C₁₈ auf ihren quatemären Rumpf allein oder gemischt.

7. Verfahren nach einem der Ansprüche 1 bis 4, **dadurch gekennzeichnet, dass** die Percarboxyl-Säure zwischen 500 und 1.000 mg/l beträgt, die hauptsächlich der Gruppe der Peressig-Säure, der Persuccininsäure, der Permilchsäure, der Perglutarsäure, der Peradipinsäure, der Perpropionsäure, der Perameisensäure und ihren Mischungen entstammt.

8. Verfahren nach Anspruch 7, **dadurch gekennzeichnet, dass** das Desinfektionsmittel 10 bis 10.000 mg/l anionische Tenside enthält, die hauptsächlich der Gruppe der Alkylbenzensulfonsäure, der Alkylsulfonate und der Carboxylsäureether entstammen.

9. Verfahren nach einem der Ansprüche 1 bis 8, **dadurch gekennzeichnet, dass** das Desinfektionsmittel während der Desinfektionsphase in Form von Schaum verwendet wird.

## Claims

1. A method for cleaning hooves of breeding animals and particularly of cattle, especially of dairy cows living in a barn by means of a spray system, wherein in a first step the hooves of the animals are cleaned using an automatic spray system for water or a detergent containing a soap or a surfactant, to remove any traces of excrements , especially dung or other kinds of soiling, for example, deriving from straw, and wherein in a second step the animal hooves cleaned before are treated by immersion into or spraying with a disinfectant and wherein the disinfectant contains from 10 to 10.000 mg/l aldehyde or from 100 to 10.000 mg/l percarboxylic acid or from 100 to 100.000 mg/l H₂O₂.

2. A method according to claim 1, **characterised in that** during the cleaning phase the animals to be treated pass through a washing passageway which, at least on one side, preferably on both sides, comprises a spray ramp which is equipped with a row of spray nozzles through which streams of water or a detergent can be directed onto the hooves of the animals to be treated at a predetermined pressure.

3. A method according to claims 1 or 2, **characterised in that** a treatment phase precedes the cleaning phase in which treatment phase the dirt adhering to the hooves of the animals is pre-softened by immersion into or spraying with water or a detergent.

4. A method according to claims 1 to 3, for the treatment of dairy cows **characterised in that** it is carried out in a device directly placed before the milking area.

5. A method according to any of claims 1 to 4, **characterised in that** the aldehyde is from 100 to 1000 mg/l obtained mainly from the group of formaldehyde, glutaraldehyde, glyoxal and mixtures thereof.

6. A method according to claim 5, **characterised in that** the disinfectant contains between 100 to 1000 mg/l cationic surfactants, essentially derived from the group of quaternary, aliphatic or heterocyclic ammonium and phosphonium derivatives having at least one long-chain alkyl group, preferably of C8-C18 on their quaternary trunk alone or mixed.

7. A method according to any of claims 1 to 4, **characterised in that** the percarboxylic acid is between 500 and 1000 mg/l, which mainly is obtained from the group of peracetic acid, persuccinic acid, perlactic acid, perglutaric acid, peradipic acid, perproprionic acid, performic acid and mixtures thereof.

8. A method according to claim 7, **characterised in that** the disinfectant contains from 10 to 10.000 mg/l anionic surfactants which are mainly obtained from the group of alkyl benzene sulphonic acid, alkyl sulphonates, and carboxylic acid ethers.

9. A method according to any of claims 1 to 8, **characterised in that** the disinfectant is used during the phase of disinfection in the form of foam.

## Revendications

1. Procédé pour nettoyer les sabots de bovidés, notamment de vaches à lait qui vivent à l'étable, à l'aide d'un système de pulvérisation, procédé selon lequel lors d'une première étape, on nettoie les sabots des animaux à l'aide d'un système de pulvérisation automatique de projection d'eau ou d'un agent de nettoyage, qui contient du savon ou un agent tensioactif, de manière à éliminer toute trace d'excréments, notamment de fientes ou d'autres saletés, qui par exemple proviennent de la paille et, lors d'une seconde étape, on traite les sabots préalablement nettoyés des animaux en les immergeant dans ou en leur appliquant par pulvérisation un agent désinfectant, et selon lequel l'agent désinfectant contient 10-10 000 mg/l d'aldéhyde ou 100-10 000 mg/l d'acide percarboxylique ou 100-100 000 mg/l de H₂O₂.

2. Procédé selon la revendication 1, **caractérisé en ce que** pendant la phase de nettoyage, les animaux à traiter franchissent un passage de lavage, qui comporte, au moins en un emplacement, de préférence des deux côtés, une rampe de pulvérisation qui est équipée d'une rangée de buses de pulvérisation, à l'aide desquelles des jets d'eau ou d'un agent de nettoyage peuvent être dirigés, sous une pression prédéterminée, sur les sabots des animaux à traiter.

3. Procédé selon la revendication 1 ou 2, **caractérisé en ce que** la phase de nettoyage est précédée par une phase de traitement, dans laquelle un ramollissement préalable des saletés, qui adhèrent aux sabots des animaux, est obtenu par immersion ou pulvérisation dans / avec de l'eau ou dans / avec un agent de nettoyage.

4. Procédé selon l'une des revendications 1 à 3, pour le traitement de vaches à lait, **caractérisé en ce qu'**il est mis en oeuvre dans une installation qui est située directement avant la zone de traite.

5. Procédé selon l'une des revendications 1 à 4, **caractérisé en ce que** l'aldéhyde est présent entre 100 et 1000 ml/l, cette aldéhyde provenant surtout du groupe de la formaldéhyde, de la glutaraldéhyde, du glyoxal et de leurs mélanges.

6. Procédé selon la revendication 5, **caractérisé en ce que** l'agent désinfectant contient entre 10 et 10 000 mg/l, de préférence entre 100 et 1000 mg/l d'agents tensioactifs cationiques, qui proviennent essentiellement du groupe des dérivés d'ammonium et de phosphonium quaternaires, aliphatiques ou hétérocycliques, qui comportent au moins un groupe alkyle à longue chaîne, formé de préférence de C₈ et C₁₈ sur leur tronc quaternaire, isolément ou en mélange.

7. Procédé selon l'une des revendications 1 à 4, **caractérisé en ce que** l'acide percarboxylique est présent entre 500 et 1000 mg/l, et provient principalement du groupe de l'acide peracétique, de l'acide persuccinique, de l'acide perlactique, de l'acide perglutarique, de l'acide peradipinique, de l'acide perpropionique, de l'acide performique et de leurs mélanges.

8. Procédé selon la revendication 7, **caractérisé en ce que** l'agent de désinfection contient 10 à 10 000 mg/l d'agents tensioactifs anioniques, qui proviennent principalement du groupe de l'acide alkylbenzènesulfonique, de l'alkylesulfonate et de l'éther d'acide carboxylique.

9. Procédé selon l'une des revendications 1 à 8, **caractérisé en ce que** l'agent de désinfection est utilisé pendant la phase de désinfection, sous la forme d'une mousse.
